# EUROPEAN PATENT SPECIFICATION

(11) **EP 1 949 134 B1**
(45) Date of publication and mention of the grant of the patent: **09.12.2009**
(21) Application number: 06794750.7
(22) Date of filing: 12.10.2006
(51) Int. Cl.: G01S 13/93, G01S 15/93, G01S 17/93

(54) **OBJECT DETECTION SYSTEM**
OBJEKTDETEKTIONSSYSTEM
SYSTEME DE DETECTION D'OBJETS

(30) Priority: 12.10.2005 GB 0520720
(43) Date of publication of application: 30.07.2008
(73) Proprietor: BRADLEY, Dennis, Howards Cottage, Newport Road Gnosall Stafford ST20 0BN (GB); STEWART, Joseph, 40 Woodhall Park Ave. Stanningley, Pudsey Leeds LS28 7HS (GB)
(72) Inventor: BRADLEY, Dennis, Howards Cottage, Newport Road Gnosall Stafford ST20 0BN (GB); STEWART, Joseph, 40 Woodhall Park Ave. Stanningley, Pudsey Leeds LS28 7HS (GB)
(74) Representative: Patel, Binesh
(86) International application number: PCT/GB2006/003802
(87) International publication number: WO 2007/042821

(56) References cited:
- WO-A2-01/61377
- US-A1- 2003 141 965
- US-A1- 2005 128 060
- US-B1- 6 380 883

## Description

The present invention relates to object detection systems for vehicles comprising a tractor-trailer combination. The invention is particularly but not exclusively applicable to vehicles such as lorries.

US 2005/ 0 128 060 and US 6 380 883 discloses an object detection system for a tractor - trailer combination having a trailer component arranged to receive power form a power source within the tractor.

According to the invention there is provided an object detection system for a tractor - trailer vehicle combination according to claim 1.

Advantageously an occupant of the tractor, e.g. driver, does not need to remember to switch the system on - it automatically powers up from the lamp power line. The system is thus a passive system. The driver can not (intentionally or unintentionally) neglect to turn the system on.

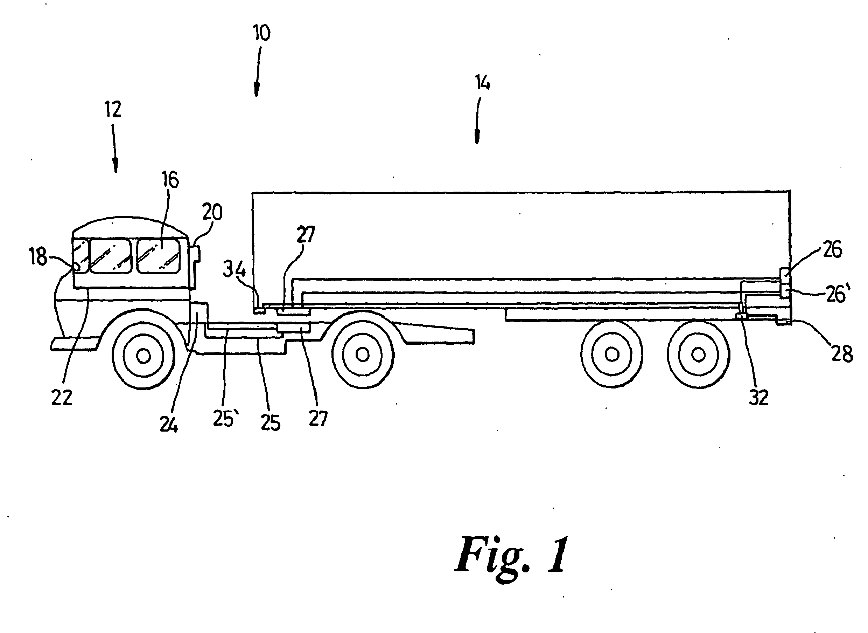

An embodiment of the present invention will now be described by way of example only with reference to the accompanying drawing in which Figure 1 shows a schematic representation of a lorry having an object detection system according to the invention.

Referring to Figure 1. a lorry 10 includes a tractor 12 and a trailer 14. The tractor 12 has a driver's cabin 16 which is where the driver sits when driving. Inside the driver's cabin is a display - in this embodiment the display is in the form of a display screen 18. The display screen 18 is provided on a dashboard in the driver's cabin 16 such that it is in convenient view of the driver when driving.

A receiver in the form of a receiver antenna 20 is mounted on a rear part of the tractor 12 e.g. on a rear wall of the driver's cabin 16. The receiver 20 is arranged to receive signals from a transmitter mounted on the trailer 14 as described in further detail below. The receiver 20 is connected to the display screen 18 by an electronic cable connection 22.

The tractor 12 has a power source in the form of a battery 24 to provide electrical power to components of the lorry 10 requiring such power. For example, the ignition mechanism is powered by the battery 24. When the driver activates the ignition mechanism for the engine of the tractor 12, a connection is made between the ignition mechanism power feed line and the battery 24. The receiver 20 is connected to the ignition mechanism power feed line and thus is always able to receive power when a key is correctly inserted in the tractor 12 - therefore it is also able to obtain power from the battery 24 whenever the engine is running. The connection between the receiver 20 and the ignition mechanism is via a cable running from the receiver to the ignition mechanism. The lights at the rear of the trailer 14 are also powered by the battery 24 when the tractor 12 and the trailer 14 are joined together. When the tractor 12 and trailer 14 are joined together a cable connection is made between the tractor 12 and its battery and the trailer 14 in a known manner.

Amongst other components, lights provided at the rear end of the trailer 14, e.g. brake lights 26 and reversing lights 26', are powered by the battery 24. A power feed line 25 connects the battery 24 to the brake lights 26 via a connector 27 which connects electronic cables on the tractor 12 to cables on the trailer 14. Similarly a power feed line 25' connects the battery 24 via the connector 27 to the reversing lights 26'. Object detection sensors 28, 30 are mounted at a rear end of the trailer 14 on each side of the trailer 14. The connector 27 does not include a connection for providing power to any object detection sensor. Each object detection sensor 28, 30 is arranged to detect whether or not there is an object within a predetermined distance of the sensor. Sensors are provided on each side of the trailer 14 so that information can be obtained regarding the position of a nearby object relative to the sides of the trailer 14, i.e. it can be determined whether the object is towards the right side or the left side of the trailer.

Each sensor 28, 30 is connected to an electronic control unit 32 by a wire connection. In other embodiments any suitable connection may be used e.g. wireless or they may be mounted on the same circuit board. The electronic control unit 32 is further connected by a wire connection to a transmitter 34 mounted near a front end of the trailer 14. The electronic control unit 32 is arranged to obtain information from the sensors 28, 30 regarding nearby objects e.g. their proximity and location. The electronic control unit 32 is also arranged to send this information to the transmitter 34 for transmission. The electronic control unit 32 also has a cable connection to the brake lights 26, and in particular to the brake light power feed line 25 such that when the brake lights 26 are receiving power the electronic control unit 32 is able to receive power. Similarly the electronic control unit 32 has a cable connection to the reversing lights 26', and in particular to the reversing light power feed line 25' such that when the vehicle is reversing and the reversing lights 26' are activated and receiving power, the electronic control unit 32 is also able to receive power. When the electronic control unit 32 receives power it is able to provide power to the sensors 28, 30 and transmitter 34 - i.e. it can receive information from the sensors 28, 30 and transmit this information via the transmitter 34. The transmitter 34 is arranged to transmit a wireless signal which the receiver 20 is capable of receiving. In this embodiment the wireless signal is a RF signal - in other embodiments it may be any other suitable type of wireless signal.

In use, a driver connects the tractor 12 to the trailer 14 and cables of the tractor 12 are connected to cables of the trailer 14 via the connector 27. When it is desired to reverse the lorry 10 and an object is in the proximity of the reversing path then the driver needs to be alerted of the presence of the object. Initially after the tractor 12 and trailer 14 have been connected together the driver will move the lorry 10 forwards and activate the brakes. This braking operation is often used by the driver to check that the tractor and trailer are correctly connected together, that the connector 27 is correctly attached and that the trailer brake mechanism in particular is correctly connected and working. In some countries this operation must be carried out by law for safety reasons. Once the brakes are activated the brake light 26 is powered up and consequently the electronic control unit 32 also receives power. Advantageously the electronic control unit 32 is initially powered up from the brake light 26 power feed and not any other light. This is because the brake light is the first light to be activated and is activated before any significant amount of driving takes place. In this way, the object detection system is automatically operational before driving. The driver does not need to remember to activate the system. It is also a known problem that some drivers intentionally do not activate known object detections systems since they can be awkward to use.

The electronic control unit 32 requires very little power to transmit information via the transmitter 34. Therefore once the brake light 26 has initially received power, the electronic control unit 32 is powered up. When the electronic control unit 32 is powered up after the trailer 14 is first attached to the tractor 12, it generates a randomly encoded "rolling code" locking signal. This locking signal comprises an identification part which effectively provides identification of the transmitter 34, and hence the trailer 14, from which it is emitted. This is because the identification part of the signal is unique to a particular ECU 32 and is fixed i.e. it does not vary each time a new signal is generated. The rest of the signal does vary randomly for security reasons in accordance with well known "rolling code" systems. Each time that the connector 27 is used to attach a trailer 14 to a tractor 12, this identification signal is generated and transmitted by the electronic control unit 32 when the brakes are first activated. The transmitter 34 is arranged to transmit the encoded locking signal under instruction from the electronic control unit 32 once the signal has been generated. After the brakes have initially been activated, then deactivated and the identification signal has been generated and transmitted, the electronic control unit 32 remains in standby mode without any further power source since it receives enough power in the initial period in which the brakes were activated to remain in this mode - the ECU 32 does not require much power to remain in the standby mode.

The receiver 20, which is powered up from the ignition power feed line, receives the encoded locking signal which provides identification of the trailer 14 to which the tractor 12 (which mounts the receiver 20) is attached. The receiver 20 is then arranged to only receive further signals identified as originating from the transmitter 34 on the trailer 14. This identification is possible since all further transmissions from the transmitter 34 will be signals which include the same encoded identification part. The receiver 20 has an associated memory which is arranged to store details of the identification part of the locking signal and also a processor which is arranged to compare any incoming signals to the stored identification part to ensure that only signals having this identification part are accepted for processing. In this way it is ensured that signals from transmitters other than the transmitter 34 originating from the electronic control unit 32 and the trailer 40 are not received and processed. This identification part is included in all transmissions from the transmitter 34 until the tractor 12 and trailer 14 are disconnected. Following disconnection, signals having the previously correct identification part are no longer accepted for processing (i.e. the identification part becomes invalid) and a new identification part associated with a different transmitter will be provided if and when another trailer is connected to the tractor 12. In some embodiments when the tractor and trailer are initially joined and the identification signal is sent, the driver receives an audible or visual or audiovisual alert via the display 18 when the receiver 20 receives the identification signals.

As the lorry 10 is reversing, the reversing lights 26' are activated and the sensor arrangement including the sensors 28, 30 is powered up via the connection between the power feed line 25' and the battery 24. An object comes into detection range of one of the object detection sensors 28. In this embodiment the detection range is about 3 metres from the sensor. In other embodiments different, known sensors may be used and the detection range will vary. Whilst the sensor 28 does not detect any object (i.e. the object is outside the detection range) this information is sent to the electronic control unit 32 which does not transmit any information regarding the detection of an object via the transmitter 34. Once an object is detected by the sensor 28 the electronic control unit 32 receives information regarding the proximity of the object and its location (according to which sensor 28, 30 has detected the object). This information is transmitted via the transmitter 34. The receiver 20 receives the transmitted information and relays it to the display screen 18 where a visual indication is provided to the driver that an object has been detected within the range of detection of the sensor 28 and towards the side of the lorry 10 upon which the relevant sensor 28 is located.

Also the sensor 28 is able to provide information to the electronic control unit 32 regarding the precise distance between the object and the sensor and this information can also be relayed via the transmitter 34 to the driver. Also, the location of the object relative to the sensor 28 or a side of the trailer 14 can also be determined by the sensor 28. This information is also relayed to the driver in the same way. The display 18 also includes an audible alert for the driver. Initially when an object is detected the audible alert is a series of short beeps. As the object becomes closer to the sensor 28 the beeps become more frequent until such time as the object is a predetermined minimum allowed distance from the sensor and the audible alert changes to a constant tone. At this point the driver should stop. In this embodiment, the visual display comprises a series of LEDs which indicate the distance of an object from the sensor and which side of the vehicle the object is detected on.

Advantageously this object detection system requires no additional power source on the trailer 14. It is initially powered up automatically when the brake light is first operated after the tractor and trailer are joined together and then it uses power from the reversing power feed line during its continued operation. Therefore, no driver/user input is required to switch the system on.

When two lorries 10, 10' are in close proximity and possibly both reversing together there may be a possibility of signal contamination between transmitters 34, 34' and receivers 20, 20'. The electronic control unit 32 encodes the signal transmitted from the transmitter 34 so that it can only be read by its corresponding receiver 20 (i.e. the receiver mounted upon the tractor attached to the trailer which mounts the transmitter 34) and not another receiver 20' mounted upon a different tractor. The electronic control unit 32' performs a similar encoding operation. This is possible since the encoding system is initially activated when the trailer 14 is attached to the tractor 12 for the first time so that the receiver 20 will only receive signals from the transmitter 34 provided on the trailer 14 to which the tractor 12 is attached. When the tractor 12 and trailer 14 are first attached and the brake light is first activated the receiver 20 receives a first encoded signal as described above. The signal includes an identification part identifying the transmitter 34 (and hence trailer 14) from which it has originated. The receiver 20 is arranged to then only receive signals from this transmitter 34 (i.e. signals encoded with the relevant identification part) until the connector 27 is disconnected i.e. the tractor 12 and trailer 14 are disconnected. After disconnection, the receiver 20 will not receive further signals until the connector 27 is used to connect another trailer to the tractor 12. For example, if the tractor 12 is connected to the trailer 14', the receiver 20 is able to receive signals from the transmitter 34'.

Advantageously, a large number of lorries in close proximity can use the object detection system of the present invention without the possibility of a tractor receiver picking up a trailer transmission from a trailer to which it is not connected.

Various modifications may be made to the embodiment described above. For example, the display may be in the form of LEDs or any other suitable visual display. The audio alert may take any other suitable form. Any combination of audible, visible or both display means may be provided.

A single sensor at the rear of the trailer may be sufficient to detect objects. Alternatively, more than two sensors may be provided. The sensors may not provide accurate information regarding the distance between a detected object and the sensor - instead the sensor may only be able to detect whether or not the object is within a predetermined distance limit/proximity range. The sensor may also not be able to provide accurate location information - instead the driver will only have information concerning which sensor has detected the object. The driver or another operator may be able to alter the distance at which the sensor detects an object - this may vary according to various factors e.g. driver's skill/driving conditions etc.

The transmitter may be provided at a different location on the trailer e.g. towards the rear of the trailer nearer to the sensor(s). Communication between the sensors and electronic control unit or the control unit and transmitter or the receiver and display may be wireless.

The electronic control unit and sensor or electronic control unit and transmitter or all of these components may be provided in the same housing. The transmitter may be provided spaced from a rear of the trailer e.g. towards its centre.

In some embodiments a separate transmitter/receiver or both may be provided for the part of the system which sends the identification part of the signal and the part of the system which sends signals relating to detected objects. Some means of communication must be provided between the two parts of the system in order to ensure that signals relating to detected objects are only received and processed at the relevant receiver when they originate from the correct transmitter (and thus, trailer).

In some embodiments a component mounted on the trailer, other than a lamp, which is powered by a power source on the tractor may be used in conjunction with its power feed line to provide power to the, or each, electronic control unit.

## Claims

1. An object detection system for a tractor (12) - trailer (14) vehicle combination comprising a sensor arrangement mounted on the trailer (14), the sensor arrangement being arranged to detect objects and to transmit, in the form of a wireless signal, information relating to detected objects to a receiver (20) mounted on the tractor (12), the receiver (20) being arranged to receive the wireless signal, the trailer (14) comprising a brake lamp (26) aranged to receive power from a power source (24) on the tractor (12) upon application of the vehicle brakes via a brake lamp power line which is arranged to be connected to the power source **characterised in that,** the sensor arrangement is arranged to receive power from the brake lamp power line upon application of the vehicle brakes.

2. The system of Claim 1 in which the sensor arrangement comprises an object detection sensor (28) arranged to detect objects and a transmitter (34) arranged to transmit the information.

3. The system of Claim 2 in which the sensor arrangement comprises a controller (32) arranged to receive the information from the sensor and to send the information to the transmitter.

4. The system of any preceding claim further comprising a reversing lamp (26) arranged to receive power from the power source when the vehicle is reversing via a reversing lamp power line, the sensor arrangement being arranged to receive power from the reversing lamp power line when the vehicle is reversing.

5. The system of any preceding claim further comprising an encoder arranged to encode the transmitted wireless signal such that it can be recognised as having originated from the trailer.

6. The system of Claim 5, wherein the encoder is arranged to receive power from the power source via the brake lamp power line which is arranged to be connected to the power source upon application of the vehicle brakes.

7. The system of Claim 5 or Claim 6 wherein the controller (32) comprises the encoder.

8. The system of any of Claims 5 to 7 further comprising a processor and memory associated with the receiver and arranged to compare the received signal with an expected encoded signal to determine whether the received signal originates from the trailer.

9. The system of Claim 8 wherein the transmitted signal comprises an identification part, generated after a tractor and trailer are first attached, wherein if the identification part is not present in a received signal then the processor is arranged not to process the received signal, and optionally wherein after the tractor and trailer are disconnected, the identification part becomes invalid such that the processor is arranged not to process a received signal even if it includes the identification part, and optionally wherein upon attachment of the tractor to a subsequent trailer, the transmitted signal comprises a further identification part, which is generated when the tractor and subsequent trailer are first attached.

10. The system of any preceding claim further comprising an audible, visible, audiovisual or other suitable alert arranged to alert an occupant of the tractor when an object is detected.

11. The system of Claim 10 in which the alert comprises a display screen (18) in a cabin of the tractor.

12. The system of any preceding claim in which the sensor arrangement comprises a sensor arranged to determine the distance of an object from the sensor, the location of the object relative to the sensor or both.

13. The system of any of Claims 2 to 12 in which the sensor is mounted towards a rear part of the trailer.

## Patentansprüche

1. Objektdetektionssystem für eine Zugmaschinen (12) - Anhänger (14) Fahrzeugkombination, das eine Sensoranordnung aufweist, die am Anhänger (14) angebracht ist, wobei die Sensoranordnung eingerichtet ist, Objekte zu detektieren und in der Form eines Funksignals Informationen, die detektierte Objekte betreffen, an einen Empfänger (20) zu senden, der an der Zugmaschine (12) angebracht ist, wobei der Empfänger (20) eingerichtet ist, das Funksignal zu empfangen, wobei der Anhänger (14) eine Bremsleuchte (26) aufweist, die eingerichtet ist, bei Betätigung der Fahrzeugbremsen Strom von einer Stromquelle (24) an der Zugmaschine (12) über eine Bremsleuchtenstromleitung zu erhalten, die eingerichtet ist, mit der Stromquelle verbunden zu werden, **dadurch gekennzeichnet, dass** die Sensoranordnung eingerichtet ist, bei Betätigung der Fahrzeugbremsen Strom von der Bremsleuchtenstromleitung zu erhalten.

2. System nach Anspruch 1, wobei die Sensoranordnung einen Objektdetektionssensor (28), der eingerichtet ist, Objekte zu detektieren, und einen Sender (34) aufweist, der eingerichtet ist, die Informationen zu senden.

3. System nach Anspruch 2, wobei die Sensoranordnung eine Steuereinrichtung (32) aufweist, die eingerichtet ist, die Informationen vom Sensor zu empfangen und die Informationen an den Sender zu schicken.

4. System nach einem der vorhergehenden Ansprüche, das ferner eine Rückfahrleuchte (26) aufweist, die eingerichtet ist, über eine Rückfahrleuchtenstromleitung Strom von der Stromquelle zu erhalten, wenn das Fahrzeug rückwärts fährt, wobei die Sensoranordnung eingerichtet ist, Strom von der Rückfahrleuchtenstromleitung zu erhalten, wenn das Fahrzeug rückwärts fährt.

5. System nach einem der vorhergehenden Ansprüche, das ferner einen Codierer aufweist, der eingerichtet ist, das gesendete Funksignal zu codieren, so dass erkannt werden kann, dass es vom Anhänger stammt.

6. System nach Anspruch 5, wobei der Codierer eingerichtet ist, Strom von der Stromquelle über die Bremsleuchtenstromleitung zu erhalten, die eingerichtet ist, bei Betätigung der Fahrzeugbremsen mit der Stromquelle verbunden zu werden.

7. System nach Anspruch 5 oder 6, wobei die Steuereinrichtung (32) den Codierer aufweist.

8. System nach einem der Ansprüche 5 bis 7, das ferner einen Prozessor und Speicher aufweist, die mit dem Empfänger verbunden und eingerichtet sind, das empfangene Signal mit einem erwarteten codierten Signal zu vergleichen, um festzustellen, ob das empfangene Signal vom Anhänger stammt.

9. System nach Anspruch 8, wobei das gesendete Signal einen Identifizierungsteil aufweist, der erzeugt wird, nachdem eine Zugmaschine und ein Anhänger zuerst angekoppelt werden, wobei dann, wenn der Identifizierungsteil in einem empfangenen Signal nicht vorhanden ist, der Prozessor eingerichtet ist, das empfangene Signal nicht zu verarbeiten, und wobei optional nachdem die Zugmaschine und Anhänger getrennt werden, der Identifizierungsteil ungültig wird, so dass der Prozessor eingerichtet ist, ein empfangenes Signal nicht zu verarbeiten, selbst wenn es den Identifizierungsteil enthält, und wobei optional beim Ankoppeln der Zugmaschine an einen nachfolgenden Anhänger das gesendete Signal einen weiteren Identifizierungsteil aufweist, der erzeugt wird, wenn die Zugmaschine und der nachfolgenden Anhänger zuerst angekoppelt werden.

10. System nach einem der vorhergehenden Ansprüche, das ferner einen hörbaren, sichtbaren, audiovisuellen oder anderen geeigneten Alarm aufweist, der eingerichtet ist, einen Insassen der Zugmaschine zu alarmieren, wenn ein Objekt detektiert wird.

11. System nach Anspruch 10, wobei der Alarm einen Anzeigeschirm (18) in einer Kabine der Zugmaschine aufweist.

12. System nach einem der vorhergehenden Ansprüche, wobei die Sensoranordnung einen Sensor aufweist, der eingerichtet ist, den Abstand eines Objekts vom Sensor, den Ort des Objekts relativ zum Sensor oder beides festzustellen.

13. System nach einem der Ansprüche 2 bis 12, wobei der Sensor zu einem Hinterteil des Anhängers angebracht ist.

## Revendications

1. Système de détection d'objet pour une combinaison de véhicules de type tracteur (12) - remorque (14), comprenant un dispositif à capteur monté sur la remorque (14), le dispositif à capteur étant conçu pour détecter des objets et pour transmettre, sous la forme d'un signal sans fil, des informations concernant des objets détectés à un récepteur (20) monté sur le tracteur (12), le récepteur (20) étant conçu pour recevoir le signal sans fil, la remorque (14) comprenant un feu de freinage (26) conçu pour recevoir de l'énergie électrique d'une source d'énergie électrique (24) présente sur le tracteur (12) lors de l'application des freins du véhicule par l'intermédiaire d'une ligne d'alimentation de feu de freinage qui est conçue pour être reliée à la source d'alimentation électrique, **caractérisé en ce que** le dispositif à capteur est conçu pour recevoir de l'énergie électrique de la ligne d'alimentation du feu de freinage lors de l'application des freins du véhicule.

2. Système selon la revendication 1, dans lequel le dispositif à capteur comprend un capteur de détection d'objet (28) conçu pour détecter des objets et un émetteur (34) conçu pour émettre les informations.

3. Système selon la revendication 2, dans lequel le dispositif à capteur comprend une unité de commande (32) conçue pour recevoir les informations du capteur et pour envoyer les informations à l'émetteur.

4. Système selon l'une quelconque des revendications précédentes, comprenant en outre un feu de recul (26) conçu pour recevoir de l'énergie électrique de la source d'énergie électrique lorsque le véhicule effectue une marche arrière par l'intermédiaire d'une ligne d'alimentation de feu de recul, le dispositif à capteur étant conçu pour recevoir de l'énergie électrique de la ligne d'alimentation du feu de recul lorsque le véhicule effectue une marche arrière.

5. Système selon l'une quelconque des revendications précédentes, comprenant en outre un codeur conçu pour coder le signal sans fil émis de façon qu'il puisse être reconnu comme étant provenu de la remorque.

6. Système selon la revendication 5, dans lequel le codeur est conçu pour recevoir de l'énergie électrique de la source d'énergie électrique par l'intermédiaire de la ligne d'alimentation de feu de freinage, qui est conçu pour être relié à la source d'alimentation électrique lors de l'application des freins du véhicule.

7. Système selon la revendication 5 ou 6, dans lequel l'unité de commande (32) comprend le codeur.

8. Système selon l'une quelconque des revendications 5 à 7, comprenant en outre un processeur et une mémoire associés au récepteur et conçus pour comparer le signal reçu à un signal codé attendu afin de déterminer si le signal reçu provient de la remorque.

9. Système selon la revendication 8, dans lequel le signal émis comprend une partie d'identification générée après le premier accrochage du tracteur et de la remorque, dans lequel, si la partie d'identification n'est pas présente dans un signal reçu, le processeur est alors conçu pour ne pas traiter le signal reçu et, à titre facultatif, dans lequel, après décrochage du tracteur et de la remorque, la partie d'identification devient invalide, de telle sorte que le processeur est conçu pour ne pas traiter un signal reçu même si ce dernier comporte la partie d'identification et, à titre facultatif, dans lequel, lors de l'accrochage du tracteur à une remorque suivante, le signal émis comprend une partie d'identification supplémentaire qui est générée lors du premier accrochage du tracteur et de la remorque suivante.

10. Système selon l'une quelconque des revendications précédentes, comprenant en outre une alterte audible, visible, audiovisuelle ou autre, conçue pour avertir un occupant du tracteur lorsqu'un objet est détecté.

11. Système selon la revendication 10, dans lequel l'alerte comprend un écran d'affichage (18) dans une cabine du tracteur.

12. Système selon l'une quelconque des revendications précédentes, dans lequel le dispositif à capteur comprend un capteur conçu pour déterminer la distance d'un objet au capteur, la position de l'objet par rapport au capteur, ou les deux.

13. Système selon l'une quelconque des revendications 2 à 12, dans lequel le capteur est monté vers une partie arrière de la remorque.
